# EUROPEAN PATENT APPLICATION

(11) **EP 2 243 895 A2**
(43) Date of publication of application: **27.10.2010**
(21) Application number: 09380196.7
(22) Date of filing: 23.12.2009
(51) Int. Cl.: E04F 15/02

(54) **Demountable floor covering**

(30) Priority: 24.04.2009 ES 200930095 P
(71) Applicant: Butech Building Technology, S.A., 12540 Villarreal, Castellón (ES)
(72) Inventor: Fenollosa Esteve, José Luis, 12540 Villarreal, Castellón (ES)
(74) Representative: Carvajal y Urquijo, Isabel

(57) **Abstract**

Demountable floor covering consisting of independent pieces comprising a lower shock-absorbing layer (1) and a resistant covering upper layer (2). The lower layer (1) has equal recesses (4) from its edges, with a choked outlet (5). The independent pieces are joined together by means of intermediate joining elements (6) which are tightly coupled in opposite recesses (4) of consecutive pieces.

## Description

### Field of the invention

The present invention refers to a demountable floor covering, and more specifically, to a covering of the kind made up of independent pieces and intermediate joining elements, which is placed dry on leveled floors, allowing an instant and clean laying, without using joining materials or producing debris.

The covering of the invention is especially suitable for indoors, on leveled pavement, both on new work and on already existing pavement.

### Background of the invention

There exist known floor coverings of the kind exposed, suitable for dry mounting. These coverings generally consist of wood pieces, which can have along their edges tongue and groove joints which secure the fixing between consecutive pieces, or otherwise use straps or auxiliary elements which serve as joining means between the covering pieces.

In any case, a wood covering is attained which can be unsuitable for many applications, as it cannot adequately bear static and dynamic loads without being damaged. Besides, the coverings obtained with the pieces indicated prevent obtaining surfaces of another nature and are generally not conceived as demountable coverings.

### Description of the invention

The object of the present invention is a floor covering, which can be dry laid and is easily mounted, engaging the constitutive pieces with the help of intermediate elements which secure its laying, without any risk of accidental uplifts, but enabling at all times to completely or partially dismount the covering. Besides, the covering of the invention offers a ceramic surface on which it is possible to walk, with high hardness and which can bear elastic and dynamic loads without any risk of being damaged.

As indicated before, the covering of the invention belongs to the type consisting of independent pieces and intermediate joining elements.

The independent pieces, according to the invention, consist of a lower shock-absorbing layer and a resistant upper covering layer, having both of them a coinciding contour and being joined together by means of an adhesive. The lower layer has discontinuous recesses from its edges, with choked outlet, being said recesses covered by the upper covering layer.

As regards the intermediate joining elements, their contour is equal to the double of the contour of the recesses of the lower shock-absorbing layer, and their thickness is equal to that of said layer.

The lower layer will preferably consist of an elastically deformable material, such as EVA (Ethylene Vinyl Acetate) which, due to its nature, decisively contributes in aspects such as the acoustics and ergonomic characteristics of the system.

As regards the upper covering layer it will be ceramic and define the visible surface of the covering pieces, offering a surface with great resistance to any kind of external action.

With the aforementioned constitution, the pieces that form the covering offer a ceramic tile aspect.

The intermediate joining elements can be of the same nature as the lower shock-absorbing layer of the pieces that form the covering or they can be rigid, and they constitute connecting elements between consecutive pieces of the covering.

The recesses of the lower shock-absorbing layer of the covering pieces can have an oblong contour, with a major axis parallel to the adjacent edge of the lower shock-absorbing layer, which will end in said edge through a passage which is thinner than the length of said axis. The intermediate joining elements will have a contour equal to the double of said recess contour, as it has already been indicated, adopting a double H configuration, with rounded edges.

With the aforementioned constitution, in order to lay the covering the pieces or tiles are consecutively placed on the floor, inserting the intermediate joining elements on the recesses of the first piece laid on the floor, and next laying the consecutive piece or tile so that the recesses thereof coincide with the protruding portions of the intermediate joining elements fixed to the previous piece, exerting pressure downwardly until it is fit on said intermediate joining elements. Always through a slight pressure, the pieces or tiles are coupled in the corresponding parts of the intermediate joining elements. Once the covering has been finished, all the pieces forming it will be engaged to one another, through intermediate joining elements, being possible to use said covering immediately, obtaining a completely dry ceramic floor-laying.

The laying of the covering of the invention is carried out without generating any debris and without being necessary to carry out works, thus reducing installation costs. Thanks to its nature, the covering obtained is suitable for the maintenance of underfloor heating and installations that require inspection, since the tiles can be removed or lifted without altering contiguous ones.

Thanks to its versatility, the covering of the invention can be applied in the domestic field or in any other kind of establishments, either public or private ones, and it can be specially applied on those surfaces which frequently change their appearance such as stores, malls, etc.

The nature of the lower layer which forms part of the pieces or tiles that constitute the covering of the invention, made of elastic materials, offers excellent energy restitution, thus offering greater comfort.

The pieces or tiles that form the covering of the invention can also have on the edges of the upper layer an angular profile of elastically compressible material, such as PVC, which can be conceived as an adjustable frame of the upper layer edges and which will enable to attain better settling of the pieces between one another and at the same time to give complete continuity to the external aspect of the covering surface.

### Brief description of the drawings

The attached drawings show a non-limiting example of an embodiment, which will allow a better understanding of the characteristics and advantages of the covering of the invention, being as follows:
Figure 1 shows a top plan view of a piece to form the covering of the invention, with a partially suppressed upper layer.
Figure 2 shows a cross section of the same piece, according to the cutting line II-II of figure 1.
Figure 3 shows a perspective view of one of the intermediate joining elements between the pieces that form the covering.
Figure 4 is a plan view of the same intermediate joining element.
Figure 5 is a section of an intermediate joining element, according to the cutting line V-V of figure 4.
Figure 6 shows a schematic plan view of the system of laying and joining between the pieces or tiles that form the covering of the invention.
Figure 7 is a partial section of the covering of the invention, obtained according to the cutting line VII-VII of figure 6.
Figures 8 and 9 show two successive phases of the mounting of the pieces that form the covering of the invention.
Figure 10 is a partial perspective of one of the pieces that form part of the covering of the invention, with an angular adjustment profile coupled to the edges of the upper layer.

### Detailed description of an embodiment

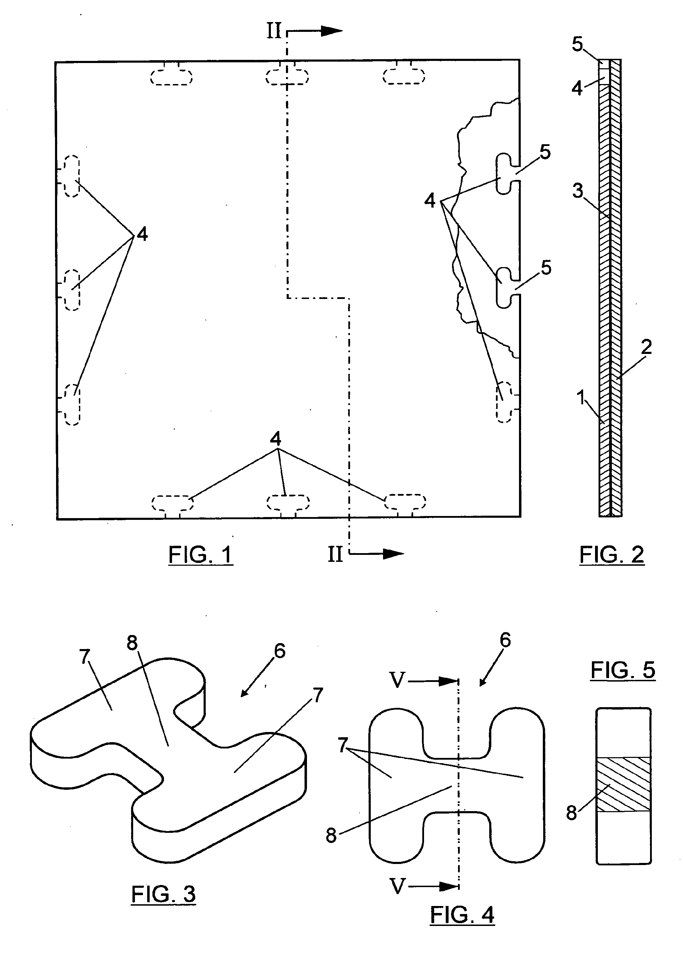

Figures 1 and 2 show, as a non-limiting example, one of the pieces used to form the covering of the invention. This piece consists of two layers, a lower one 1, made of a material with certain capacity to elastically deform, and an upper one 2, made of ceramic material, both of them having an equal contour and joined together by an adhesive 3. The lower layer 1 will preferably be made of EVA.

The lower layer has, from its edges, equal recesses 4, which are arranged in the same position in all edges. These recesses will be preferably oblong, with the major axis parallel to the adjacent edge of the lower layer 1, where they will end through a choked outlet 5.
The covering of the invention is completed with intermediate joining elements 6, figures 3 to 5, which have a contour which is equal to the double of the contour of the recesses 4 with their outlet 5, and a thickness equal to that of the lower layer 1 of the covering pieces, these joining elements adopting an H shape, whose parallel branches 7 will correspond to the oblong contour of the recesses 4 and whose central branch 8 will correspond to the double of the choking or outlet 5 of the recesses.

The recesses 4 and their outlet 5 are covered by the upper layer 2 of the covering pieces.

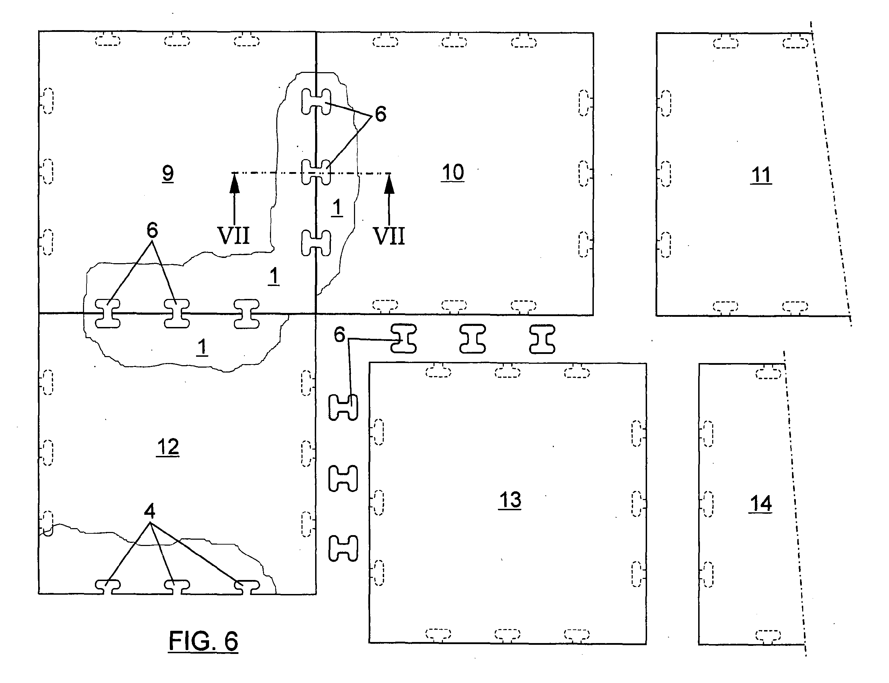

For the formation of a covering with the pieces or tiles of figures 1 and 2 and the intermediate connecting elements of figures 3 to 5, they are all laid as shown in figure 6, which is a plan view of six pieces or tiles, in some of which the upper layer of the covering 2 has been partially suppressed, so that the recesses 5 an the intermediate joining elements 6 can be better appreciated.

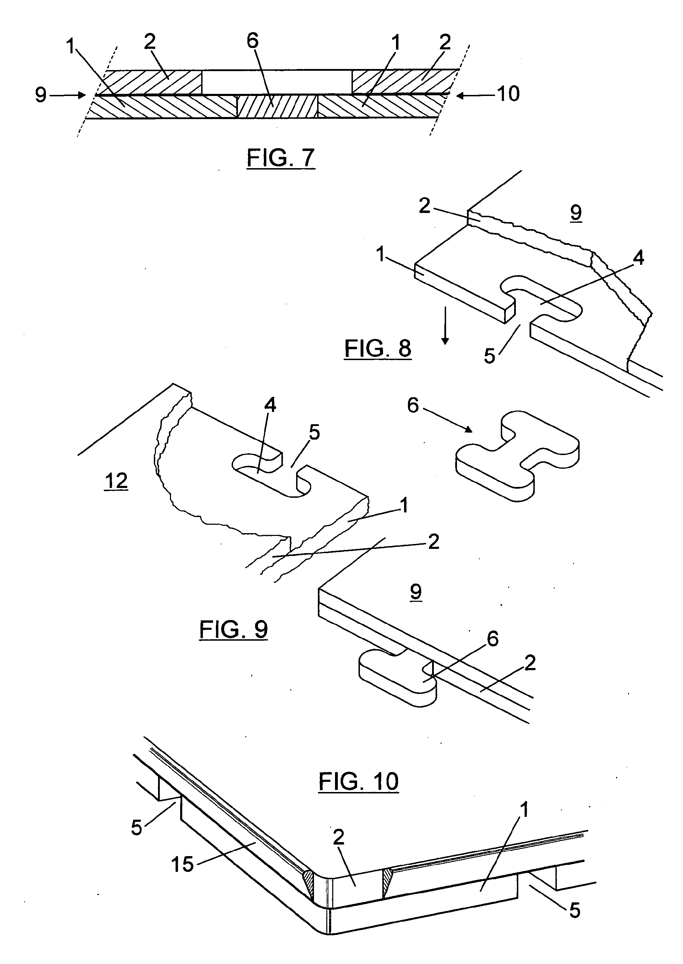

The covering will start laying a first piece or tile 9, under whose recesses 5 the intermediate joining elements 6 are located, figure 8, pressing downwardly the piece 9 until its recesses 5 are coupled on the intermediate joining elements 6, which are thus partially housed in the lower layer 1, as shown in figure 9, half of the intermediate joining element 6 protruding from it, to rest thereon another adjacent piece, 10 or 12, figure 6, so that the recesses 5 of these adjacent pieces coincide on the protruding part of the intermediate joining element 6 fixed before the piece 9, thus attaining the successive coupling of the pieces which can follow the sequence shown in figure 6, where a line comprising successive pieces 9, 10 and 11 is placed first and then, a second line of pieces 12, 13 and 14, always with intermediate joining elements 6 which are coupled in the recesses 5 facing the opposite edges of consecutive pieces, to serve as joining or connecting elements between said pieces, thus achieving that all the pieces which constitute the covering are consecutively engaged through joining elements 6.

The mounting system described enables to dismount any of the pieces which constitute the covering without having to alter or modify the position of the adjacent pieces.

The covering of the invention will offer a ceramic covering appearance, of high hardness, suitable to walk on it as soon as its laying is finished.

As shown in figure 10, the pieces or tiles which form the covering of the invention can have an angular profile 15 on the edges of the lower layer 2, made of elastically compressible material, such as PVC, which will enable to attain better settling between tiles and at the same time to obtain a visible surface showing total continuity. This profile can be configured as a peripherally adjusted frame on the edges of the upper layer 2.

## Claims

1. Demountable floor covering, comprising independent pieces and intermediate joining elements, **characterized in that** the independent pieces comprise a lower shock-absorbing layer and a resistant covering upper layer, both of them having a coinciding contour and being joined together through an adhesive; whose lower layer has recesses from its edges, with a choked outlet, being said recesses covered by the covering upper layer; and whose intermediate joining elements have a contour equal to the double of the contour of the recesses and a thickness equal to that of the lower shock-absorbing layer of the tiles.

2. Covering according to claim 1, **characterized in that** said recesses are arranged in number and position coinciding with all the edges of the lower layer of the pieces.

3. Covering according to claim 1, **characterized in that** the lower layer is made up of an elastically deformable material.

4. Covering according to claim 3, **characterized in that** the lower layer consists of an EVA plate.

5. Covering according to claim 1, **characterized in that** the upper layer of the independent pieces is ceramic.

6. Covering according to the preceding claims, **characterized in that** the recesses have an oblong contour, with a major axis parallel to the adjacent edge of the lower shock-absorbing layer, which ends on said edge through a passage which is thinner than the length of said axis.

7. Covering according to claim 1, **characterized in that** on the edges of the lower layer there is an angular profile made of elastically compressible material.

8. Covering according to claim 7, **characterized in that** the angular profiles attached to the four edges of the upper layer of each piece are joined together at their ends, forming an adjustable frame on the contour of said upper layer.

9. Covering according to the preceding claims, **characterized in that** the intermediate joining elements adopt a configuration similar to an H.
